(19) Europäisches Patentamt
European Patent Office
Office européen des brevets

(11) Veröffentlichungsnummer : **0 143 077**
**B1**

# (12) EUROPÄISCHE PATENTSCHRIFT

(45) Veröffentlichungstag der Patentschrift : **27.07.88**

(51) Int. Cl.⁴ : **D 06 P 1/16**, D 06 P 5/20, C 09 B 67/38// D06P3/54

(21) Anmeldenummer : **84810544.1**

(22) Anmeldetag : **09.11.84**

## (54) Verfahren zum Färben von hydrophobem Fasermaterial.

(30) Priorität : **15.11.83 CH 6138/83**

(43) Veröffentlichungstag der Anmeldung : **29.05.85 Patentblatt 85/22**

(45) Bekanntmachung des Hinweises auf die Patenterteilung : **27.07.88 Patentblatt 88/30**

(84) Benannte Vertragsstaaten : **BE CH DE FR GB IT LI**

(56) Entgegenhaltungen :
**EP-A- 0 060 433**
**EP-A- 0 090 272**
**DE-A- 2 330 662**
**DE-A- 2 534 618**
**DE-A- 2 724 951**
**GB-A- 2 014 618**
**CHEMICAL ABSTRACTS, Band 89, Nr. 10, 4. September 1978, Seite 56, Nr. 76300f, Columbus, Ohio, US**

(73) Patentinhaber : **CIBA-GEIGY AG**
**Klybeckstrasse 141**
**CH-4002 Basel (CH)**

(72) Erfinder : **Navratil, Josef, Dr.**
**Bläsiring 10/4**
**CH-4057 Basel (CH)**
Erfinder : **Abel, Heinz**
**Egertenstrasse 5**
**CH-4153 Reinach (CH)**

**EP 0 143 077 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zum Färben von hydrophobem Fasermaterial unter HT-Bedingungen mit unformierten Dispersionsfarbstoffen, sowie das nach dem Verfahren gefärbte Fasermaterial.

Hydrophobes Fasermaterial, in erster Linie Polyestergarne oder auch Gewebe oder Gewirke aus Polyesterfasern, werden mit Dispersionsfarbstoffen entweder unter Normaldruck, bei Temperaturen bis zu 100 °C in Gegenwart eines Carriers oder in einem geschlossenen Färbeapparat bei Temperaturen von 120 bis 150 °C unter Druck gefärbt. Beide Verfahren haben den Nachteil, dass zu ihrer Durchführung Dispersionsfarbstoffe benötigt werden, die in einer möglichst feinteiligen, stabil dispergierten Form vorliegen. Demzufolge müssen die Farbstoffe nach der Synthese langwierigen Mahloperationen unterworfen werden, beispielsweise in Rührwerks-Kugelmühlen oder Sandmühlen, zusammen mit geeigneten Dispergiermitteln. Schliesslich muss der heruntergemahlene Dispersionsfarbstoff in eine stabile, nicht zur Reagglomeration neigende, lagerfähige Flüssigformulierung überführt oder einem schonenden Trocknungsverfahren unterworfen werden, damit ein Farbstoffpulver erhalten wird, das in der Färbeflotte ohne Klumpenbildung rasch dispergierbar ist.

Um diesen aufwendigen Mahl- und Formulierungsprozess zu umgehen, wird in der europäischen Patentanmeldung 0 060 433 bereits ein HT-Färbeverfahren für Polyester-Stückware vorgeschlagen, das mit Dispersionsfarbstoffen durchgeführt wird, die unformiert sind, d. h. im Anschluss an die Synthese keiner Nachbehandlung, vor allem keiner Nassmahlung, unterworfen werden. Wesentlich an diesem bekannten Verfahren ist, dass der Farbstoff während des Färbens zum grössten Teil als ungelöster Feststoff in der Flotte vorliegt. Damit ist dieses Verfahren praktisch auf die Stückgutfärberei in Jet-Apparaten beschränkt. Beim Färben von Spulen oder Wickelkörpern in Zirkulationsapparaten kommt es unweigerlich zur Abfiltration des ungelösten Farbstoffs auf dem Garn oder Gewebe.

Desweiteren wird in der DE-A-2 724 951 ein HT-Färbeverfahren von hydrophobem Fasermaterials beschrieben, das mit unformierten organophilen Farbstoffen durchgeführt wird. Wesentlich ist dabei, dass der Farbstoff einen Schmelzpunkt von $< 140$ °C besitzt und somit unter Färbebedingungen als Emulsion in der Färbeflotte vorliegt oder dass der Farbstoff hydrophilierende Gruppierungen enthält.

Ueberraschenderweise wurde nun gefunden, dass hydrophobes Fasermaterial, insbesondere Polyesterfasermaterial, unabhängig von Aufmachungsform und Färbeapparatur mit unformierten Dispersionsfarbstoffen, die frei von wasserlöslichmachenden Gruppen sind, gefärbt werden kann, wenn diese vor dem Einbringen in den Färbeapparat mit Hilfe eines auf Dispersionsfarbstoffe hydrotropierend wirkenden Tensids oder Tensidgemisches in Wasser gelöst werden.

Gegenstand der Erfindung ist somit ein Verfahren zum Färben von hydrophobem Fasermaterial unter HT-Bedingungen mit unformierten Dispersionsfarbstoffen aus wässriger Flotte, das dadurch gekennzeichnet ist, dass man einen oder mehrere solcher Farbstoffe mittels eines auf Dispersionsfarbstoffe hydrotropierend wirkenden Tensids oder Tensidgemisches bei einer Temperatur von 70° bis 100 °C in Wasser löst, die Farbstofflösung in einen, auf 70° bis 100 °C erhitztes Wasser und Substrat enthaltenden Färbeapparat einbringt und anschliessend die Färbeflotte auf Färbetemperatur erhitzt oder den Farbstoff mittels des hydrotropierend wirkenden Tensids bzw. Tensidgemisches bei einer Temperatur von über 100 °C unter Druck in Wasser löst, die Lösung in einen geschlossenen Färbeapparat einschleust, der auf 100 ° bis 150 °C erhitztes Wasser und Substrat enthält und in beiden Fällen unter stetiger Flottenzirkulation die Färbung bei einer Temperatur von 120° bis 150 °C fertigstellt, wobei auf 1 Teil Dispersionsfarbstoff 5 bis 100 Teile Tensid bzw. Tensidgemisch verwendet werden.

Die erfindungsgemäss verwendbaren Dispersionsfarbstoffe können den verschiedensten Farbstoffklassen angehören. Insbesondere handelt es sich um Azo-, Anthrachinon-, Nitro-, Methin-, Styryl-, Azostyryl-, Naphthoperinon-, Chinophthalon-, Acridon-, oder Naphthochinonimin-Farbstoffe, die frei von wasserlöslichmachenden Gruppen sind.

Bevorzugte Dispersionsfarbstoffe sind metallfreie Mono- oder Disazofarbstoffe, Nitrofarbstoffe, Acridonfarbstoffe, Anthrachinonfarbstoffe oder Chinophthalonfarbstoffe. Farbstoffe die in Gegenwart von hydrotropierend wirkenden Mitteln eine zur Verwendung in vorliegendem Verfahren ausreichende Wasserlöslichkeit aufweisen, lassen sich leicht durch entsprechende Vorversuche auswählen.

Die Farbstoffe können grundsätzlich ohne jede Nachbehandlung vor allem ohne aufwendige Nassmahlung, z. B. direkt von der Synthese her, etwa in Form des feuchten Presskuchens oder auch als wässrige Suspension, eingesetzt werden. Zweckmässigerweise wird man jedoch den Farbstoff zur Einstellung der typkonformen Farbstärke mit der entsprechenden Menge an Coupage versehen, homogenisieren und gegebenenfalls anschliessend trocknen. Es versteht sich von selbst, dass das Verfahren auch mit handelsüblichen formierten Farbstoffen, durchführbar ist, bzw. unformierte Farbstoffe im Gemisch mit formierten Farbstoffen verwendet werden können.

Der oder die Dispersionsfarbstoffe werden in Form einer heissen wässrigen Lösung in der Färbeapparat eingebracht, dabei soll im folgenden unter dem Begriff Lösung eine echte monomolekulare Lösung, eine kolloidale Lösung, sowie eine Mikrodispersion verstanden werden. Der Farbstoff wird der Färbeflotte somit in gelöster, solubilisierter oder mikrodispergierter Form zugeführt.

Die Einspeisung der Farbstofflösung in die im Färbeapparat zirkulierende Flotte erfolgt entweder

durch einmalige Zugabe der gesamten, beispielsweise in einem, mit dem Färbeapparat verbundenen Ansatzbehälter, vorbereiteten Lösung oder durch portionsweises Zudosieren. Letzteres kann durch entsprechende Steuerung, z. B. in Relation zur Anzahl der Umpumpzyklen, geschehen oder auch in Abhängigkeit von der Aufheizgeschwindigkeit erfolgen, wenn die Farbstofflösung der Färbeflotte nach und nach, während dem Aufheizen auf Färbetemperatur zugesetzt wird. Im übrigen ist es vorteilhaft, wenn die Farbstofflösung beim Eindosieren in den Färbeapparat die gleiche Temperatur aufweist, wie die zirkulierende Flotte.

Um den Dispersionsfarbstoff bei Temperaturen von 70° bis 150 °C in Wasser zu lösen, wird erfindungsgemäss ein auf diesen hydrotropierend wirkendes Tensid oder Tensidgemisch verwendet. In erster Linie handelt es sich um anionische, wie auch kationische Tenside. Daneben kommen auch Amphotenside in Frage. Als besonders günstig haben sich jedoch Gemische aus einem nichtionischen und einem anionischen Tensid erwiesen.

Als hydrotropierend wirkende anionische Tenside gelangen bevorzugt Umsetzungsprodukte von Aethylenoxid und/oder Propylenoxid mit gesättigten oder ungesättigten Fettsäuren, Fettalkoholen, Fettaminen, alicyclischen Alkoholen oder aliphatisch- aromatischen Kohlenwasserstoffen zur Anwendung, die endständig durch eine anorganische sauerstoffhaltige Säure oder eine mehrbasische Carbonsäure verestert sind. Und zwar handelt es sich im Verbindungen der Formel I

$$R{-}A{-}(CH_2\underset{\substack{|\\R_1}}{C}HO)_m{-}X \qquad (I)$$

worin R ein aliphatischer Kohlenwasserstoffrest mit 8 bis 22 Kohlenstoffatomen oder ein cycloaliphatischer oder aliphatisch-aromatischer Kohlenwasserstoffrest mit 10 bis 22 Kohlenstoffatomen, $R_1$ Wasserstoff oder Methyl,

$$A \quad -O-, -NH- \text{ oder } -\underset{\substack{\|\\O}}{C}-O-,$$

X der Säurerest einer anorganischen, Sauerstoff enthaltenden Säure oder der Rest einer mehrbasischen Carbonsäure und m eine Zahl von 1 bis 20, insbesondere 1 bis 5, ist. Der Rest R—A— leitet sich z. B. ab von höheren Alkoholen wie Decyl-, Lauryl-, Tridecyl-, Myristyl-, Cetyl-, Stearyl-, Oleyl-, Arachidyl-, Hydroabietylalkohol oder Behenylalkohol ; ferner von Fettaminen wie Stearylamin, Palmitylamin oder Oleylamin ; von Fettsäuren, wie Capryl-, Caprin-, Laurin-, Myristin-, Palmitin-, Stearin-, Arachin-, Behen-, Kokosfett-($C_8$-$C_{18}$), Decen-, Dodecen-, Tetradecen-, Hexadecen-, Oel-, Linol-, Linolen-, Eikosen-, Dokosen- oder Clupanodonsäure ; von Alkylphenolen, wie Butyl-, Hexyl-, n-Octyl-, n-Nonyl-, p-tert. Octyl, p-tert. Nonyl-, Decyl-, Dodecyl-, Tetradecyl- oder Hexadecylphenol. Bevorzugt sind Reste mit 10 bis 18 Kohlenstoffatomen, insbesondere solche, die sich von den Alkylphenolen ableiten.

Der Säurerest X leitet sich in Regel von niedermolekularen Dicarbonsäuren ab, wie z. B. Maleinsäure, Malonsäure, Bernsteinsäure oder Sulfobernsteinsäure, und ist über eine Esterbrücke mit dem Rest R—A—$(CH_2CHR_1O)_m$— verbunden. Insbesondere leitet sich X jedoch von anorganischen mehrbasischen Säuren, wie Orthophosphorsäure und Schwefelsäure ab. Der Säurerest X liegt vorzugsweise in Salzform, d. h. z. B. als Alkalimetall-, Ammonium- oder Aminsalz, vor. Beispiele für solche Salze sind Natrium-, Kalium-, Ammonium-, Trimethylamin-, Aethanolamin-, Diäthanolamin- oder Triäthanolaminsalze.

Die Herstellung dieser Verbindungen erfolgt nach bekannten Methoden, indem man an die genannten Alkohole, Fettamine, Säuren und Alkylphenole, Aethylenoxid und/oder Propylenoxid anlagert und die so erhaltenen Alkoxylate anschliessend verestert und die Ester gegebenenfalls in ihre Salze überführt. Derartige Tenside sind z. B. aus der US-Patentschrift 3 211 514 bekannt.

Von dieser Gruppe anionischer Tenside werden wiederum bevorzugt die sauren Schwefelsäureester von Alkylphenoläthoxylaten verwendet, also solche Verbindungen der angegebenen Formel, worin R—A— ein Alkylphenolrest ist. $R_1$ Wasserstoff bedeutet, m die angegebene Bedeutung hat und X für einen Schwefelsäurerest steht.

Im einzelnen genannt sind die mit Schwefelsäure veresterten Umsetzungsprodukte von 1 Mol Butylphenol und 3 Mol Aethylenoxid, 1 Mol Tributylphenol und 5 Mol Aethylenoxid, 1 Mol Nonylphenol und 2 Mol Aethylenoxid, 1 Mol Nonylphenol und 10 Mol Propylen- bzw. Aethylenoxid, 1 Mol Nonylphenol und 20 Mol Aethylenoxid, 1 Mol Dodecylphenol und 4 Mol Aethylenoxid oder 1 Mol Pentadecylphenol und 5 Mol Aethylenoxid. Die Schwefelsäurehalbester der genannten Alkoxylate liegen bevorzugt als Ammoniumsalz vor. Gegebenenfalls können auch Mischungen der anionischen Tenside eingesetzt werden.

Als hydrotropierend wirkende kationische Tenside kommen in erster Linie einen höheren Alkylrest aufweisende quaternäre Ammoniumverbindungen der Formel II

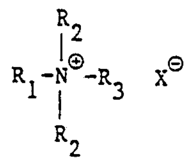

(II)

in Frage, wobei die Substituenten $R_1$ bis $R_3$ und das Symbol $X^{\ominus}$ die folgende Bedeutung haben :

$R_1$ ein gesättigter und/oder ungesättigter Alkylrest mit 8 bis 22 Kohlenstoffatomen ;

$R_2$ unabhängig voneinander jeweils ein Alkylrest mit 1 bis 4 Kohlenstoffatomen oder eine Polyalkylenoxidkette mit 3 bis 30 Aethylenoxid- und/oder Propylenoxideinheiten oder Aethylenoxid- und Styroloxideinheiten ;

$R_3$ ein gegebenenfalls durch eine Hydroxy-, Methoxy-, oder Aethoxygruppe oder durch einen Carbamoyl- oder Phenylrest substituierter Alkylrest mit 1 bis 4 Kohlenstoffatomen ;

$X^{\ominus}$ das Anion einer organischen oder anorganischen Säure, wie z. B. Chlorid, Bromid, Sulfat oder Methosulfat.

Derartige Verbindungen sind bekannt oder nach bekannten Verfahren zugänglich, beispielsweise durch Umsetzen eines Fettamins oder einer Mischung von Fettaminen, wie beispielsweise Kokosfettamin mit Aethylenoxid und/oder Propylenoxid und anschliessendes Quaternieren des so erhaltenen Alkoxylats z. B. mit Dimethylsulfat (siehe z. B. H. Stache, Tensid-Taschenbuch ; Carl Hanser Verlag 1981).

Als quaternäre Fettaminalkoxylate sind beispielsweise die folgenden genannt ;

Mit Chloracetamid quaterniertes Anlagerungsprodukt von 8 Mol Aethylenoxid an 1 Mol Talgfettamin ;

mit Dimethylsulfat quaterniertes Anlagerungsprodukt von 30 Mol Aethylenoxid an 1 Mol eines $C_{18}$-$C_{22}$-Fettamins ;

mit Dimethylsulfat quaterniertes Anlagerungsprodukt von 30 Mol Aethylenoxid an 1 Mol Laurylamin ;

mit Dimethylsulfat quaterniertes Anlagerungsprodukt von 15 Mol Aethylenoxid an 1 Mol Laurylamin ;

mit Dimethylsulfat quaterniertes Anlagerungsprodukt von 15 Mol Aethylenoxid an 1 Mol Stearylamin ;

mit Dimethylsulfat quaterniertes Anlagerungsprodukt von 1 Mol Styroloxid und 30 Mol Aethylenoxid an 1 Mol Stearylamin ;

mit Dimethylsulfat quaterniertes Anlagerungsprodukt von 6 Mol Propylenoxid und 30 Mol Aethylenoxid an 1 Mol Caprylamin ;

mit Dimethylsulfat quaterniertes Anlagerungsprodukt von 1 Mol Styroloxid und 20 Mol Aethylenoxid an 1 Mol Stearylamin ;

Aufgrund ihrer guten solubilisierenden Wirkung haben sich jedoch insbesondere solche kationischen Tenside der Formel II bewährt, die neben dem höheren Alkylrest $R_1$ als Substituenten $R_2$ einen Methyloder Aethylrest aufweisen und bei denen $R_3$ für einen durch die Phenylgruppe substituierten Alkylrest mit 1 bis 4 Kohlenstoffatomen steht ; $X^{\ominus}$ hat die bereits angegebene Bedeutung. Auch Mischungen derartiger Verbindungen kommen in Frage, die beispielsweise erhalten werden, wenn man bei Herstellung dieser Tenside von Fettamingemischen, wie z. B. Kokosfettamin, ausgeht.

Neben den rein anionischen bzw. kationischen Tensiden kommen als Solubilisierungsmittel auch Amphotenside in Betracht. Beispielhalft genannt sind die folgenden Verbindungen :

Ammoniumsalz des sauren Monoschwefelsäureesters des Anlagerungsproduktes von 2,5 Mol Aethylenoxid an 1 Mol Talgfettamin ; Ammoniumsalz des sauren Monoschwefelsäureesters des Anlagerungsproduktes von 4 Mol Aethylenoxid an 1 Mol Talgfettamin ; Ammoniumsalz des sauren Monoschwefelsäureesters des Anlagerungsproduktes von 6 Mol Aethylenoxid an 1 Mol Talgfettamin, Ammoniumsalz des sauren Monoschwefelsäureesters des Anlagerungsproduktes von 8 Mol Aethylenoxid an 1 Mol Talgfettamin ; mit Chloracetamid quaterniertes Ammoniumsalz des amphoteren Schwefelsäureesters des Anlagerungsproduktes von 8 Mol Aethylenoxid an 1 Mol Talgfettamin ;

mit Dimethylsulfat quaternisiertes Ammoniumsalz des amphoteren Schwefelsäureesters des Anlagerungsproduktes von 30 Mol Aethylenoxid an 1 Mol eines $C_{18}$-$C_{22}$ Fettamins.

Als wirksam erweisen sich ferner Tenside aus der Gruppe der Aminoxide. Derartige Verbindungen zeigen je nach pH des Färbebades nichtionischen (neutrale bis basische Flotte) bzw. kationischen (saure Flotte) Charakter. In Frage kommen beispielsweise

N-Dodecyl-N,N-dimethylaminoxid
N-Myristyl-N,N-dimethylaminoxid
N-Dodecyl-N,N-di-2-hydroxyethylaminoxid
N-Hexadecyl-N,N-di-2-hydroxyethylaminoxid
N-Hexadecyl-N,N-dimethylaminoxid
N-Oleyl-N,N-di-2-hydroxyethylaminoxid
N-Stearyl-N,N-di-2-hydroxyethylaminoxid
N-Kokosfettsäureamidopropyl-N,N-dimethylaminoxid
N-Talgfettsäureamidopropyl-N,N-dimethylaminoxid.

Als hydrotropierend wirkende nichtionische Tenside, die, wie erwähnt, im Gemisch mit anionischen Tensiden verwendet werden, kommen bevorzugt Umsetzungsprodukte von Aethylenoxid und/oder Propylenoxid mit

a) einem niedermolekularen, aliphatischen Polyol, oder
b) einem gesättigten und/oder ungesättigten Fettalkohol mit 6 bis 20 C-Atomen, oder
c) einem Alkylphenol mit 4 bis 12 C-Atomen im Alkylrest, oder
d) einem Hydroxybiphenyl, oder
e) einem gesättigten und/oder ungesättigten Fettamin mit 14 bis 20 C-Atomen, oder
f) einer gesättigten und/oder ungesättigten Fettsäure mit 14 bis 20 C-Atomen, oder
g) einem gesättigten und/oder ungesättigten Fettsäure-(N,N-bis-hydroxyalkyl) amid

in Frage, wobei auf 1 Mol der unter a) bis g) genannten Verbindungen 2 bis 10 Mol, insbesondere 4 bis 8 Mol, Aethylenoxid und/oder Propylenoxid kommen.

Als derartige Alkoxylierungsprodukte seien im einzelnen genannt :

a) Umsetzungsprodukte von Aethylenglykol, Propylenglykol, Glycerin oder Pentaerythrit mit 5 bis 10 Mol an Aethylenoxid und/oder Propylenoxid pro Mol an Polyol ;

b) Umsetzungsprodukte von gesättigten und/oder ungesättigten Fettalkoholen mit 6 bis 20 C-Atomen mit 2 bis 10 Mol Aethylenoxid und/oder 2 bis 10 Mol Propylenoxid je Mol Fettalkohol, vorzugsweise von gesättigten Fettalkoholen mit 6 bis 10 C-Atomen, mit 2 bis 10 Mol Aethylenoxid pro Mol Fettalkohol ;

c) Umsetzungsprodukte von Alkylphenolen mit 4 bis 12 C-Atomen im Alkylrest, mit 2 bis 10 Mol Aethylenoxid und/oder 2 bis 10 Mol Propylenoxid je Mol phenolische Hydroxylgruppe ;

d) Umsetzungsprodukte von o-, m- oder p-Phenylphenol mit 2 bis 10 Mol Aethylenoxid und/oder Propylenoxid pro Mol Hydroxybiphenyl ;

e) Umsetzungsprodukte von gesättigten und/oder ungesättigten Fettaminen mit 14 bis 20 C-Atomen mit 2 bis 10 Mol Aethylenoxid und/oder 2 bis 10 Mol Propylenoxid je Mol Fettamin ;

f) Umsetzungsprodukte von gesättigten und/oder ungesättigten Fettsäuren mit 14 bis 20 C-Atomen, mit 2 bis 10 Mol Aethylenoxid und/oder 2 bis 10 Mol Propylenoxid je Mol Fettsäure ;

g) Umsetzungsprodukte von gesättigten und/oder ungesättigten Fettsäure-(N,N-bis-hydroxyalkyl)amiden, wie z. B. Kokosölfettsäure-(N,N-bis-β-hydroxyäthyl)amid mit 2 bis 10 Mol Aethylenoxid und/oder Propylenoxid pro Mol Fettsäurehydroxyalkylamid.

Auch Gemische der Umsetzungsprodukte nach a) bis g) untereinander sind verwendbar. Diese Gemische erhält man durch Mischen einzelner Umsetzungsprodukte oder direkt durch Alkoxylierung eines Gemisches der den Umsetzungsprodukten zugrunde liegenden Verbindungen.

Als gesättigte und/oder ungesättigte Fettalkohole kommen für b) Dodecanol, Hexadecylalkohol, Palmitylalkohol, Stearylalkohol, Oleylalkohol oder Talgfettalkohole, Hexanol, 2-Aethylhexanol und Decanol in Betracht.

Als Alkylphenole für c) sind n-Butylphenol, tert.-Butylphenol, Tributylphenol, Octylphenol, p-Amylphenol, Hexylphenol, Isooctylphenol, Nonylphenol und Dodecylphenol zu nennen.

Als Fettamin für e) kommen z. B. neben Stearylamin, Palmitylamin vor allem Oleylamin in Betracht.

Für f) sind als gesättigte und/oder ungesättigte Fettsäuren z. B. Palmitinsäure, vor allem Stearinsäure und Oelsäure zu nennen.

Als besonders wirksam haben sich Umsetzungsprodukte der Gruppen c) und d) erwiesen und hier vor allem Hydroxybiphenyl-äthoxylate, wie z. B. Umsetzungsprodukte von 6 oder 8 Mol Aethylenoxid mit einem Mol o-Phenyl-phenol bzw. $C_4$ bis $C_9$ Alkylphenoläthoxylate, wie z. B. Umsetzungsprodukte von 6 bis 8 Mol Aethylenoxid mit einem Mol Butylphenol.

Die Aethylen/Propylenoxid-Umsetzungsprodukte sind bekannt oder können nach an sich bekannten Verfahren hergestellt werden (siehe z. B. : N. Schönfeldt, Grenzflächenaktive Aethylenoxid-Addukte ; Wissenschaftliche Verlagsgesellschaft mbH, Stuttgart ; 1976).

Das Mischungsverhältnis von nichtionischem zu anionischem Tensid bewegt sich vorteilhaft zwischen 1 : 4 und 4 : 1. Dabei gelangen bevorzugt solche Tensidgemische zur Anwendung, die etwa doppelt so viel nichtionisches wie anionisches Tensid enthalten.

Eine besonders stark ausgeprägte solubilisierende Wirkung hat ein Gemisch, das als nichtionische Komponente ein Umsetzungsprodukt aus 1 Mol o-Phenyl-phenol oder 1 Mol tert.-Butylphenol und 6 Mol Aethylenoxid und als anionische Komponente ein Nonylphenol-diglykoläthersulfat enthält.

Was die bevorzugte Menge an Tensid bzw. Tensidgemisch betrifft, so werden, bezogen auf 1 Teil Dispersionsfarbstoff 10 bis 80 Teile Tensid bzw. Tensidgemisch verwendet.

Die Mengen in denen die Dispersionsfarbstoffe eingesetzt werden, können je nach der gewünschten Farbtiefe in weiten Grenzen schwanken, im allgemeinen werden Mengen von 0,01 bis 10 Gewinchtsprozent eines oder mehrerer der genannten Dispersionsfarbstoffe, bezogen auf das Färbegut, verwendet.

Bei den nach vorliegendem Verfahren färbbaren hydrophoben Fasermaterialien handelt es sich in erster Linie um solche aus linearen hochmolekularen Estern aromatischer Polycarbonsäuren mit polyfunktionellen Alkoholen, beispielsweise aus Terephthalsäure und Aethylenglykol oder Dimethylolcyclohexan und Mischpolymere aus Terephthalsäure und Isophthalsäure und Aethylenglykol. Diese Materialien können, sofern die hierfür geeigneten Apparaturen vorhanden sind, in beliebigen Verarbeitungsstadien, z. B. in Form von Flocken, Kammzug, Garn, texturierten Fäden, Gewebe oder Gewirke, wie auch als

Mischgewebe unter sich oder mit anderen Fasern vorliegen, beispielsweise als Mischgewebe aus Polyester/Polyamid oder Polyester/Baumwolle.

Falls erforderlich, kann die wässrige Flotte übliche Färbehilfsmittel, vorteilhaft in kleinen Mengen, enthalten wie Säuren, insbesondere eine organische niedere Monocarbonsäure, z. B. Ameisensäure oder Essigsäure, Puffersalze, wie Ammonsulfat oder Natriumacetat, Netzmittel, Emulgiermittel oder Antischaummittel.

Das Flottenverhältnis liegt üblicherweise bei 1 : 5 bis 1 : 50 ; die Färbezeit beträgt 5 bis 60 Minuten.

Das erfindungsgemässe Verfahren wird vorzugsweise in Zirkulationsapparaten z. B. folgendermassen durchgeführt : Der oder die unformierten Farbstoffe werden als wässrige Suspension, als Presskuchen oder auch in fester Form, beispielsweise Pulver, in einem mit der Färbeapparatur verbundenen Ansatzgefäss in ca. 80° bis 90° C heissem Wasser z. B. mittels eines Gemisches aus nichtionischem und anionischem Tensid gelöst bzw. solubilisiert. Durch Zugabe von Essigsäure und Natriumacetat stellt man den pH der Farbstofflösung auf einen Wert von 4 bis 5,5 ein. Gleichzeitig wird im angeschlossenen Färbeapparat das zu färbende Polyestermaterial, das z. B. in Form eines Wickelkörpers, wie z. B. Muff, Kreuzspule, Färbebaum, oder als endlose Warenbahn vorliegt, und Wasser unter Flottenzirkulation von innen nach aussen auf eine Temperatur von ebenfalls, ca. 80° bis 90° C gebracht. Hierauf wird durch Oeffnen eines Ventils die Farbstofflösung, gegebenenfalls nach Passieren eines Filters, in den Färbeapparat eingelassen. Unter weiterer stetiger Flottenzirkulation, vorteilhaft von innen nach aussen oder auch wechselseitig, z. B. mit 5-minütigen Perioden, wird das Färbebad mit einer Geschwindigkeit von ca. 1° C/Minute auf eine Temperatur von 120° bis 150° C, vorteilhaft 125° bis 135° C, aufgeheizt. Nach Erzielung der gewünschten Farbtiefe oder bei vollständiger Erschöpfung des Färbebades — Färbezeit ca. 1 Stunde — wird die heisse Flotte abgelassen und das Färbegut gespült und getrocknet.

Die folgenden Beispiele dienen der Veranschaulichung der Erfindung ; Teile bedeuten Gewichtsteile und Prozente Gewichtprozente.

Beispiel 1

Im Ansatzbehälter eines Zirkulationsfärbeapparates werden 0,029 Teile eines unformierten Dispersfarbstoffs der Formel

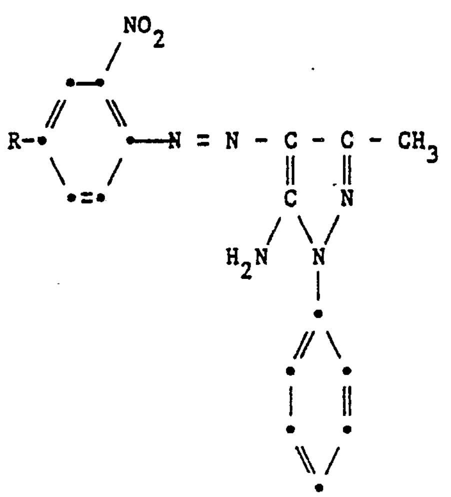

R = $-SO_2-CH_3$
$-SO_2C_2H_5$

Mischungsverhältnis 1 : 1

unter Zusatz von 1,8 Teilen einer Tensidlösung in 34 Teilen Wasser bei einer Temperatur von 90° C gelöst. Die Tensidlösung hat die folgende Zusammensetzung :

42,7 % Umsetzungsprodukt von 1 Mol o-Phenyl-phenol + 6 Mol Aethylenoxid
42,7 % Nonylphenol-diglykoläthersulfat als 40 %ige wässrige Lösung
14,2 % Wasser
0,4 % Antischaummittel

Der pH-Wert der Farbstofflösung wird durch Zusatz von Essigsäure und Natriumacetat auf 4,5 eingestellt. Anschliessend lässt man die Farbstofflösung in den Färbeapparat einlaufen, in dem sich 324 Teile Wasser, temperiert auf 90° C und 15 Teile Polyestergewebe (Crimplene®) befinden. Mit einer Geschwingkeit von 1° C/Minute wird nun die Färbeflotte auf eine Temperatur von 130° C erhitzt. Nach einer Färbezeit von einer Stunde erhält man ein einwandfrei egal gelb gefärbtes Polyestergewebe.

Beispiel 2

Man verhährt wie im Beispiel 1 beschrieben, verwendet jedoch anstelle der dort angegebenen Tensidlösung die gleiche Menge einer Tensidlösung der folgenden Zusammensetzung :

42,7 % Umsetzungsprodukt von 1 Mol tert.-Butylphenol + 6 Mol Aethylenoxid

42,7 % Nonylphenol-diglykoläthersulfat als 40 %ige wässrige Lösung
14,2 % Wasser
0,4 % Antischaummittel.

## Beispiel 3

Man verfährt wie im Beispiel 1 beschrieben, verwendet jedoch anstelle des dort angegebenen Farbstoffs 0,098 Teile des unformierten Dispersfarbstoffes der Formel

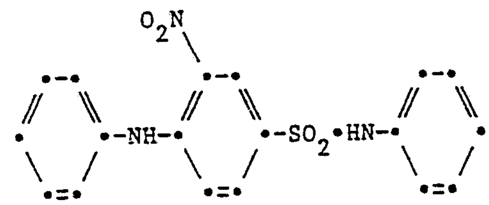

Man erhält ein in kräftigem Gelbton egal gefärbtes Polyestergewebe.

## Beispiel 4

Man verfährt wie im Beispiel 1 beschrieben, als Farbstoff verwendet man jedoch 0,031 Teile unformierten Dispersfarbstoff der Formel

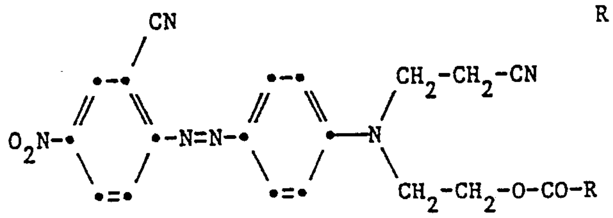

$R = -CH_3$ oder $-C_2H_5$

Man erhält ein rot gefärbtes Gewebe.

## Beispiel 5

Man verfährt wie im Beispiel 1 beschrieben, verwendet jedoch anstelle des dort angegebenen Farbstoffs 0,025 Teile eines Gemisches unformierter blauer Dispersfarbstoffe der Formeln

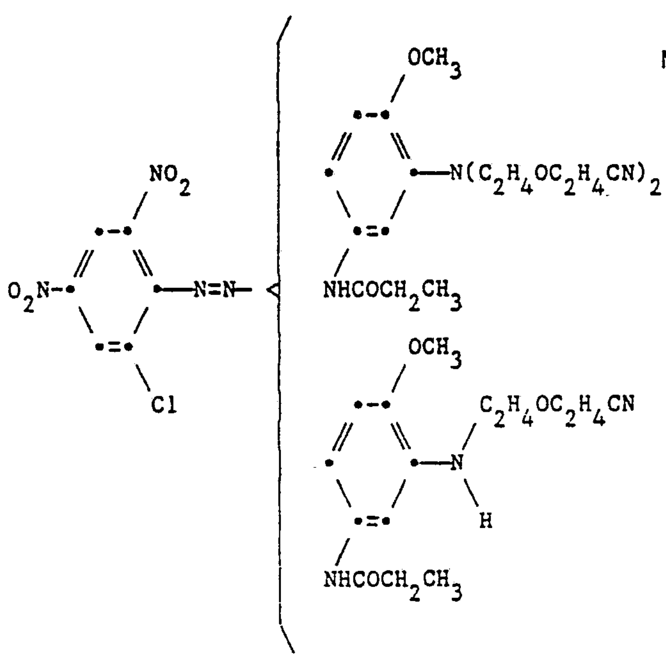

Mischungsverhältnis

ca. 40%

ca. 60%

Man erhält ein dunkelblau gefärbtes Polyestergewebe.

Beispiel 6

Man verfährt wie im Beispiel 1 beschrieben, verwendet jedoch anstelle von 1,8 Teilen 3,6 Teile der gleichen Tensidlösung und löst den unformierten Farbstoff bei einer Temperatur von 80° C. Das Wasser im Färbeapparat erwärmt man gleichfalls auf 80° C. Nach Einbringen der Farbstofflösung erhitzt man die Färbeflotte auf 130° C und färbt wie im Beispiel 1 beschrieben. Man erhält auch hier ein einwandfrei egal gefärbtes Polyestergewebe.

Beispiel 7

Man verfährt wie im Beispiel 1 beschrieben, verwendet jedoch anstelle von 1,8 Teilen der dort angegebenen Lösung eines Tensid gemisches die gleiche Menge einer 60 %igen wässrigen Lösung des kationischen Tensids der Formel

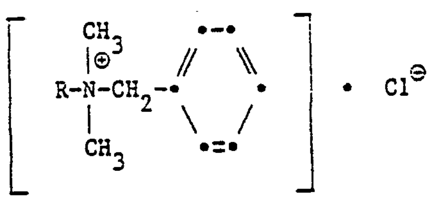

mit R = Alkylrest des Kokosfettamins.

Beispiel 8

Man verfährt wie im Beispiel 1 beschrieben, verwendet jedoch anstelle von 1,8 Teilen der dort angegebenen Lösung eines Tensid gemisches 3 Teile einer 40 %igen wässrigen Lösung von Nonylphenoldiglykoläthersulfat. Man erhält hier, wie auch gemäss Beispiel 7, ein einwandfrei egal gelb gefärbtes Polyestergewebe.

Beispiel 9

Ein Zirkulationsfärbeapparat, ausgerüstet mit einem druckfesten Ansatzgefäss, wird mit 300 Teilen Wasser gefüllt. Anschliessend werden 30 Teile Crimplene ®-Gewebe, aufgewickelt auf einen Material träger, eingebracht und das Wasser auf 130° C erhitzt. Gleichzeitig werden im Ansatzgefäss 300 Teile Wasser, enthaltend 0,057 Teile des unformierten Dispersionsfarbstoffs der im Beispiel 1 angegebenen Formel und 1,5 Teile Tensidlösung ebenfalls auf 130° C erhitzt. Die Tensidlösung weist die im Beispiel 1 angegebene Zusammensetzung auf.

Der pH-Wert der Flotte wird durch Zusatz von Essigsäure und Natriumacetat auf 4,5 eingestellt.

Nachdem Färbeapparat und Ansatzgefäss während 15 Minuten eine Temperatur von 130° C aufweisen, wird das Wasser aus dem Färbeapparat abgelassen und die Farbstofflösung mittels einer speziellen Vorrichtung aus dem Ansatzgefäss in den Apparat eingeschleust. Nach einer Färbezeit von einer Stunde bei 130° C wird eine einwandfrei egale goldgelbe Färbung erhalten, wobei der Ausziehgrad des Farbstoffs durch die Hilfsmittelkombination praktisch nicht beeinflusst wird.

**Patentansprüche**

1. Verfahren zum Färben von hydrophobem Fasermaterial unter HT-Bedingungen mit unformierten Dispersionsfarbstoffen aus wässriger Flotte, dadurch gekennzeichnet, dass man einen oder mehrere solcher Farbstoffe, die frei von wasserlöslichmachenden Gruppen sind, mittels eines auf Dispersionsfarbstoffe hydrotropierend wirkenden Tensids oder Tensidgemisches bei einer Temperatur von 70° bis 100° C in Wasser löst, die Farbstofflösung in einen, auf 70° bis 100° C erhitztes Wasser und Substrat enthaltenden Färbeapparat einbringt und anschliessend die Färbeflotte auf Färbetemperatur erhitzt oder den Farbstoff mittels des hydrotropierend wirkenden Tensids bzw. Tensidgemisches bei einer Temperatur von über 100° C unter Druck in Wasser löst, die Lösung in einen geschlossenen Färbeapparat einschleust, der auf 100° bis 150° C erhitztes Wasser und Substrat enthält und in beiden Fällen unter stetiger Flottenzirkulation die Färbung bei einer Temperatur von 120° bis 150° C fertigstellt, wobei auf 1 Teil Dispersionsfarbstoff 5 bis 100 Teile Tensid bzw. Tensidgemisch verwendet werden.

2. Verfahren gemäss Anspruch 1, dadurch gekennzeichnet, dass man als ein auf Dispersionsfarbstoffe hydrotropierend wirkendes Tensid ein anionisches oder ein kationisches Tensid oder ein Gemisch aus

einem nichtionischen und einem anionischen Tensid verwendet.

3. Verfahren gemäss Anspruch 2, dadurch gekennzeichnet, dass man ein Gemisch aus einem nichtionischen und einem anionischen Tensid verwendet.

4. Verfahren gemäss den Ansprüchen 2 und 3, dadurch gekennzeichnet, dass man als anionisches Tensid ein solches der Formel I

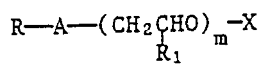
(I)

verwendet, worin R ein aliphatischer Kohlenwasserstoffrest mit 8 bis 22 Kohlenstoffatomen oder ein cycloaliphatischer oder aliphatischaromatischer Kohlenwasserstoffrest mit 10 bis 22 Kohlenstoffatomen, $R_1$ Wasserstoff oder methyl,

A -O-, -NH- oder 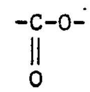

X der Säurerest einer anorganischen, Sauerstoff enthaltenden Säure oder der Rest einer mehrbasischen Carbonsäure und m eine Zahl von 1 bis 20, insbesondere 1 bis 5, ist.

5. Verfahren gemäss Anspruch 4, dadurch gekennzeichnet, dass man den sauren Schwefelsäureester eines Alkylphenoläthoxylats verwendet.

6. Verfahren gemäss Anspruch 2, dadurch gekennzeichnet, dass man als kationisches Tensid quaternäre Ammoniumverbindungen der Formel II

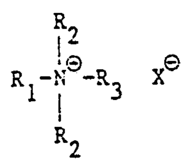
(II)

verwendet, worin

$R_1$ ein gesättigter und/oder ungesättigter Alkylrest mit 8 bis 22 Kohlenstoffatomen ;

$R_2$ unabhängig voneinander jeweils ein Alkylrest mit 1 bis 4 Kohlenstoffatomen oder eine Polyalkylenoxidkette mit 3 bis 30 Aethylenoxid- und/oder Propylenoxideinheiten oder Aethylenoxid- und Styroloxideinheiten ;

$R_3$ ein gegebenenfalls durch eine Hydroxy-, Methoxy-, oder Aethoxygruppe oder durch einen Carbamoyl- oder Phenylrest substituierter Alkylrest mit 1 bis 4 Kohlenstoffatomen ;

$X^{\ominus}$ das Anion einer organischen oder anorganischen Säure bedeutet.

7. Verfahren gemäss Anspruch 6, dadurch gekennzeichnet, dass man als kationisches Tensid der Formel II ein solches verwendet, worin $R_2$ Methyl oder Aethyl und $R_3$ durch Phenyl substituiertes Alkyl $C_1$ bis $C_4$ bedeutet und $R_1$ bzw. $X^{\ominus}$ die im Anspruch 6 angegebene Bedeutung haben.

8. Verfahren gemäss den Ansprüchen 2 und 3, dadurch gekennzeichnet, das man als nichtionisches Tensid ein Umsetzungsprodukt von Aethylenoxid und/oder Propylenoxid mit

a) einem niedermolekularen, aliphatischen Polyol, oder
b) einem gesättigten und/oder ungesättigten Fettalkohol mit 6 bis 20 C-Atomen, oder
c) einem Alkylphenol mit 4 bis 12 C-Atomen im Alkylrest, oder
d) einem Hydroxybiphenyl, oder
e) einem gesättigten und/oder ungesättigten Fettamin mit 14 bis 20 C-Atomen, oder
f) einer gesättigten und/oder ungesättigten Fettsäure mit 14 bis 20 C-Atomen, oder
g) einem gesättigten und/oder ungesättigten Fettsäure-(N,N-bis-hydroxyalkyl) amid

verwendet, wobei auf 1 mol der unter a) bis g) genannten Verbindungen 2 bis 10 Mol, insbesondere 4 bis 8 Mol Aethylenoxid und/oder Propylenoxid kommen.

9. Verfahren gemäss Anspruch 8, dadurch gekennzeichnet, dass man ein Umsetzungsprodukt von Aethylenoxid mit einem Hydroxybiphenyl oder einem $C_4$ bis $C_9$ Alkylphenol verwendet.

10. Verfahren gemäss Anspruch 3, dadurch gekennzeichnet, dass man als nichtionisches Tensid ein Umsetzungsprodukt von 1 Mol o-Phenylphenol oder 1 Mol tert.-Butylphenol jeweils mit 6 Mol Aethylenoxid und als anionisches Tensid ein Nonylphenol-diglykoläthersulfat verwendet.

11. Verfahren gemäss Anspruch 1, dadurch gekennzeichnet, dass man auf 1 Teil Farbstoff 10 bis 80 Teile Tensid bzw. Tensidgemisch verwendet.

12. Verfahren gemäss Anspruch 3, dadurch gekennzeichnet, dass man nichtionisches und anionisches Tensid in einem Verhältnis von 1 : 4 bis 4 : 1, insbesondere von 2 : 1, verwendet.

13. Verfahren gemäss Anspruch 1, dadurch gekennzeichnet, dass man als Dispersionsfarbstoff

metallfreie Mono- oder Disazofarbstoffe, Nitrofarbstoffe, Acridonfarbstoffe, Anthrachinonfarbstoffe oder Chinophthalonfarbstoffe verwendet.

14. Verfahren gemäss Anspruch 1, dadurch gekennzeichnet, dass man als hydrophobes Fasermaterial Polyestermaterial, insbesondere solches aus Polyäthylenglykolterephthalatfasern, verwendet.

**Claims**

1. A process for dyeing hydrophobic fibre material under HT conditions with unformulated disperse dyes from an aqueous liquor, which process comprises dissolving one or more such dyes, which are free from water-solubilising groups in water at a temperature from 70° to 100 °C, by means of a surfactant or mixture of surfactants which has a hydrotropic action on disperse dyes, feeding the dye solution into a dyeing apparatus which contains water heated to 70° to 100 °C and substrate, and subsequently heating the dye liquor to dyeing temperature, or dissolving the dye in water at a temperature of over 100 °C under pressure by means of the surfactant or mixture of surfactants which has a hydrotropic action, feeding the solution into a closed dyeing apparatus which contains water heated to 100° to 150 °C and substrate, and, in both cases, completing dyeing at a temperature from 120° to 150 °C with constant circulation of the liquor, where 5 to 100 parts of surfactant or surfactant mixture are used per 1 part of disperse dye.

2. A process according to claim 1, wherein an anionic or a cationic surfactant or a mixture of a nonionic and an anionic surfactant is used as the surfactant which has a hydrotropic action on disperse dyes.

3. A process according to claim 2, which comprises the use of a mixture of a nonionic and an anionic surfactant.

4. A process according to claims 2 and 3, which comprises the use of an anionic surfactant of the formula I

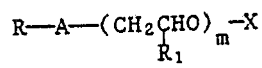

(I)

in which R is an aliphatic hydrocarbon radical of 8 to 22 carbon atoms, or a cycloaliphatic or aliphatic-aromatic hydrocarbon radical of 10 to 22 carbon atoms, $R_1$ is hydrogen or methyl

A is -O-, -NH- or 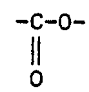

X is the acid radical of an inorganic oxygen-containing acid or the radical of a polybasic carboxylic acid, and m is an integer from 1 to 20, in particular from 1 to 5.

5. A process according to claim 4, which comprises the use of an acid sulfuric acid ester of an alkylphenol ethoxylate.

6. A process according to claim 2, wherein the cationic surfactant used is a quaternary ammonium compound of the formula II

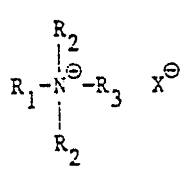

(II)

in which

$R_1$ is a saturated and/or unsaturated alkyl radical of 8 to 22 carbon atoms,

$R_2$ independently of one another in each case in an alkyl radical of 1 to 4 carbon atoms or a polalkylene oxide chain containing 3 to 30 ethylene oxide and/or propylene oxide units or ethylene oxide and styrene oxide units,

$R_3$ is an alkyl radical of 1 to 4 carbon atoms which is unsubstituted or substituted by a hydroxyl, methoxy or ethoxy group or by a carbamoyl or phenyl radical,

X is the anion of an organic or inorganic acid.

7. A process according to claim 6, which comprises the use of a cationic surfactant of the formula II, in which $R_2$ is methyl or ethyl, $R_3$ is $C_1$-$C_4$ alkyl which is substituted by phenyl, and $R_1$ and $X^{\ominus}$ are as defined in claim 6.

8. A process according to claims 2 and 3, wherein the nonionic surfactant is a reaction product of ethylene oxide and/or propylene oxide with

a) a low molecular weight aliphatic polyol, or
b) a saturated and/or unsaturated fatty alcohol of 6 to 20 carbon atoms, or
c) an alkylphenol of 4 to 12 carbon atoms in the alkyl radical, or
d) a hydroxybiphenyl, or
e) a saturated and/or unsaturated fatty amine of 14 to 20 carbon atoms, or
f) a saturated and/or unsaturated fatty acid of 14 to 20 carbon atoms, or
g) a saturated and/or unsaturated fatty acid (N,N-bis-hydroxyalkyl)-amide,

where 2 to 10 moles, in particular 4 to 8 moles, of ethylene oxide and/or propylene oxide are used per mole of the compounds mentioned under a) to g).

9. A process according to claim 8, which comprises the use of a reaction product of ethylene oxide with a hydroxybiphenyl or a $C_4$-$C_9$-alkylphenol.

10. A process according to claim 3, wherein the nonionic surfactant is a reaction product of 1 mole of o-phenylphenol with 6 moles of ethylene oxide or of 1 mole of tert-butylphenol with 6 moles of ethylene oxide, and the anionic surfactant is a nonylphenol diglycol ether sulfate.

11. A process according to claim 1, wherein 10 to 80 parts of surfactant or surfactant mixture are used per part of dye.

12. A process according to claim 3, wherein the nonionic surfactant and the anionic surfactant are used in a ratio of 1 : 4 to 4 : 1, preferably of 2 : 1.

13. A process according to claim 1, wherein the disperse dye is a metal-free monoazo or disazo dye, a nitro dye, an acridone dye, an anthraquinone dye or a quinophthalone dye.

14. A process according to claim 1, wherein the hydrophobic fibre material is polyester material, in particular made from polyethylene glycol terephthalate fibres.

## Revendications

1. Procédé pour teindre en bain aqueux une matière fibreuse hydrophobe dans des conditions de haute température à l'aide de colorants dispersés non conditionnés, caractérisé en ce que l'on dissout dans l'eau, à une température de 70 à 100 °C, un ou plusieurs tels colorants ne comportant pas de groupes hydrosolubilisants, à l'aide d'un agent tensio-actif ou d'un mélange d'agents tensio-actifs agissant sur les colorants dispersés par hydrotropie, on introduit la solution de colorants dans un appareil de teinture contenant de l'eau chauffée à une température de 70 à 100 °C et le substrat, puis on chauffe le bain de teinture à la température de teinture, ou bien on dissout le colorant dans l'eau à une température supérieure à 100 °C, sous pression, à l'aide de l'agent tensio-actif ou du mélange d'agents tensio-actifs agissant par hydrotropie, on fait passer la solution dans un appareil de teinture fermé contenant de l'eau chauffée à une température de 100 à 150 °C et le substrat, et dans les deux cas, on termine la teinture à une température de 120 à 150 °C, avec circulation constante du bain, la quantité de l'agent tensio-actif ou du mélange d'agents tensio-actifs utilisée étant de 5 à 100 parties pour 1 partie du colorant dispersé.

2. Procédé selon la revendication 1, caractérisé en ce que l'on utilise, en tant qu'agent tensio-actif agissant par hydrotropie sur les colorants dispersés, un agent tensio-actif anionique ou un agent tensio-actif cationique, ou un mélange d'un agent tensio-actif non ionique et d'un agent tensio-actif anionique.

3. Procédé selon la revendication 2, caractérisé en ce que l'on utilise un mélange d'un agent tensio-actif non ionique et d'un agent tensio-actif anionique.

4. Procédé selon les revendications 2 et 3, caractérisé en ce que l'on utilise, en tant qu'agent tensio-actif anionique, un agent tensio-actif de formule I

$$R-A-(CH_2\underset{R_1}{\underset{|}{C}}HO)_m-X \qquad (I)$$

dans laquelle R représente un radical hydrocarboné aliphatique comportant de 8 à 22 atomes de carbone, ou un radical hydrocarboné cycloaliphatique ou aliphatique-aromatique comportant de 10 à 22 atomes de carbone, $R_1$ représente un hydrogène ou un méthyle

A représente $-O-$, $-NH-$ ou $-\underset{\underset{O}{\|}}{C}-O-$

X représente le radical d'un acide inorganique contenant de l'oxygène ou le radical d'un polyacide carboxylique et m est un nombre valant de 1 à 20, plus spécialement de 1 à 5.

5. Procédé selon la revendication 4, caractérisé en ce que l'on utilise l'ester sulfurique acide d'un alkylphénol éthoxylé.

6. Procédé selon la revendication 2, caractérisé en ce que l'on utilise, en tant qu'agent tensio-actif

cationique, un composé ammonium quaternaire de formule II.

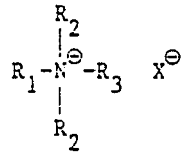

(II)

dans laquelle

$R_1$ représente un radical alkyle saturé et/ou insaturé comportant de 8 à 22 atomes de carbone ;

les symboles $R_2$ représentent chacun, indépendamment l'un de l'autre, un groupe alkyle comportant de 1 à 4 atomes de carbone ou une chaîne polyoxyalkylène comportant de 3 à 30 motifs oxyde d'éthylène et/ou oxyde de propylène ou motifs oxyde d'éthylène et oxyde de styrène ;

$R_3$ représente un groupe alkyle comportant de 1 à 4 atomes de carbone, éventuellement substitué par un groupe hydroxy, méthoxy ou éthoxy ou par un radical carbamoyle ou phényle ;

$X^{\ominus}$ représente l'anion d'un acide organique ou inorganique.

7. Procédé selon la revendication 6, caractérisé en ce que l'on utilise, en tant qu'agent tensio-actif cationique de formule II, un tel agent tensio-actif dans lequel $R_2$ représente un groupe méthyle ou éthyle et $R_3$ représente un groupe alkyle en $C_1$-$C_4$ substitué par un groupe phényle, et $R_1$ et $X^{\ominus}$ ont les significations indiquées dans la revendication 6.

8. Procédé selon les revendications 2 et 3, caractérisé en ce que l'on utilise, en tant qu'agent tensio-actif non ionique, un produit de réaction de l'oxyde d'éthylène et/ou de l'oxyde de propylène sur :

a) un polyol aliphatique à bas poids moléculaire, ou bien

b) un alcool gras saturé et/ou insaturé, comportant de 6 à 20 atomes de carbone, ou bien

c) un alkylphénol comportant de 4 à 12 atomes de carbone dans le groupe alkyle, ou bien

d) un hydroxybiphényle, ou bien

e) une amine grasse saturée et/ou insaturée, comportant de 14 à 20 atomes de carbone, ou bien

f) un acide gras saturé et/ou insaturé, comportant de 14 à 20 atomes de carbone, ou bien

g) un (N,N-bis-hydroxyalkyl)-amide d'acide gras saturé et/ou insaturé,

à raison de 2 à 10 moles, plus spécialement 4 à 8 moles d'oxyde d'éthylène et/ou d'oxyde de propylène par mole des composés énumérés ci-dessus en a) à g).

9. Procédé selon la revendication 8, caractérisé en ce que l'on utilise un produit de réaction de l'oxyde d'éthylène sur un hydroxybiphényle ou sur un (alkyle en $C_4$-$C_9$)-phénol.

10. Procédé selon la revendication 3, caractérisé en ce que l'on utilise, en tant qu'agent tensio-actif non ionique, un produit de réaction d'1 mole d'o-phényl-phénol ou d'1 mole de tert-butylphénol avec, dans les deux cas, 6 moles d'oxyde d'éthylène, et en tant qu'agent tensio-actif anionique, un sulfate de nonylphénoldiglycoléther.

11. Procédé selon la revendication 1, caractérisé en ce que l'on utilise de 10 à 80 parties d'agent tensio-actif ou de mélange d'agents tensio-actifs pour 1 partie du colorant.

12. Procédé selon la revendication 3, caractérisé en ce que l'on utilise l'agent tensio-actif non ionique et l'agent tensio-actif anionique dans des proportions relatives de 1 : 4 à 4 : 1, plus spécialement 2 : 1.

13. Procédé selon la revendication 1, caractérisé en ce que l'on utilise en tant que colorants dispersés, des colorants mono- ou dis-azoïques non métallés, des colorants nitrés, des colorants d'acridone, des colorants anthraquinoniques ou des colorants de quinophtalone.

14. Procédé selon la revendication 1, caractérisé en ce que l'on utilise, en tant que matière fibreuse hydrophobe, une matière en polyester, en particulier une matière constituée de fibres de poly(téréphtalate d'éthylène-glycol).